# EUROPÄISCHE PATENTSCHRIFT

(11) **EP 3 491 338 B1**
(45) Veröffentlichungstag und Bekanntmachung des Hinweises auf die Patenterteilung: **13.04.2022**
(21) Anmeldenummer: 17811191.0
(22) Anmeldetag: 25.07.2017
(51) Int. Cl.: G01C 21/32, G01S 19/03, G01S 5/00, G01S 19/39

(54) **VERFAHREN ZUM SENDEN VON DATEN VON EINEM FAHRZEUG AN EINEN SERVER UND VERFAHREN ZUM AKTUALISIEREN EINER KARTE**
METHOD FOR TRANSMITTING DATA FROM A VEHICLE TO A SERVER, AND METHOD FOR UPDATING A MAP
PROCÉDÉ D'ENVOI DE DONNÉES D'UN VÉHICULE À UN SERVEUR ET PROCÉDÉ D'ACTUALISATION D'UNE CARTE

(30) Priorität: 01.08.2016 DE 102016214156
(43) Veröffentlichungstag der Anmeldung: 05.06.2019
(73) Patentinhaber: Continental Teves AG & Co. OHG, 60488 Frankfurt am Main (DE)
(72) Erfinder: STÄHLIN, Ulrich, 65760 Eschborn (DE)
(74) Vertreter: Continental Corporation
(86) Internationale Anmeldenummer: PCT/DE2017/200073
(87) Internationale Veröffentlichungsnummer: WO 2018/024298

(56) Entgegenhaltungen:
- WO-A1-2009/037186
- US-A1- 2009 138 188
- US-A1- 2014 221 005
- US-B2- 8 471 763
- US-B2- 8 600 661

## Beschreibung

Die Erfindung betrifft ein Verfahren zum Aktualisieren einer Karte durch einen Server.

Es ist seit längerer Zeit bekannt, die Position von Fahrzeugen mittels Satellitennavigation (GNSS = Global Navigation Satellite System) zu bestimmen. Es ist ebenfalls bekannt oder zumindest Stand der Forschung, Kartenmaterial auf Basis von derart bestimmten Daten aus Fahrzeugen zu erzeugen.

Ein diesbezügliches Verfahren geht beispielsweise aus der US 2009/0138188 A1 hervor, wobei von einer Mehrzahl an Fahrzeugen insbesondere Positionsdaten zur Modellierung einer Straßennetzwerk Darstellung empfangen werden.

Die US 2014/221005 A1 betrifft ein Verfahren auf einer Mobilstation bzw. MS mit folgenden Schritten:
- Erlangen von Standortassistenzdaten, die eine Karte mit einer Vielzahl von Kartenebenen aufweisen, wobei die Kartenebenen eine erste Vielzahl von Kartenebenen aufweisen, wobei jede Kartenebene in der ersten Vielzahl von Kartenebenen eine Vielzahl von Kartenstandorten in einem Basisstationsalmanach bzw. BSA mit entsprechenden räumlich variablen Vorwärtsverbindungskalibrierungswerten bzw. FLC-Werten für Signale assoziiert, die durch eine oder mehrere Antennen gesendet werden, und wobei die erste Vielzahl von Kartenebenen einen Teil einer Hierarchie von Kartenebenen bildet, wobei jede Kartenebene in der ersten Vielzahl von Kartenebenen mit einer entsprechenden Standortgranularität bzw. -auflösung assoziiert ist;
- Durchführen, basierend auf den Standortassistenzdaten, von Messungen, um einen Messungssatz zu erlangen, der Signalmessungen für eine Antenne von den ein oder mehreren Antennen aufweist, wobei eine Kalibrierung, die wenigstens einen räumlich variablen FLC-Wert entsprechend einer Standortschätzung der MS aufweist, auf die wenigstens eine Messung in dem Messungssatz angewandt wird; und
- Senden des Messungssatzes an einen BSA-Server. Die US 2009/138188 A1 offenbart die Modellierung eines Graphen eines Straßennetzwerks, umfassend das Empfangen von Positionsdaten von einer Vielzahl von Fahrzeugen.

Bisher werden für Navigationsaufgaben oder beispielsweise einen eHorizon typischerweise Daten fest im Fahrzeug gespeichert oder über einen Server bezogen. Derartige Daten werden in der Regel von einem Dienstanbieter mit speziellen Fahrzeugen eingefahren. Diese Fahrzeuge sind mit sehr präziser, aber damit auch sehr aufwändiger und teurer Messtechnik ausgerüstet. Beispielsweise kann es sich dabei um hochwertige Zwei- oder Mehrfrequenzempfänger zur besonders genauen Positionsbestimmung handeln, eventuell verbunden mit sehr hochwertigen Inertial Measurement Units (IMU). Diese sind jedoch sehr teuer. Dementsprechend ist auch das bereitgestellte Kartenmaterial sehr teuer.

Es wäre wünschenswert, derartige spezielle Fahrzeuge durch die Masse an normalen Fahrzeugen zu ersetzen und die Kartendaten auf einem Server auf Basis dieser vielen Daten zu lernen.

Es wird auch darüber nachgedacht, hochwertige Zwei-Frequenzempfänger mit Korrekturdaten zu verwenden, um daraus entsprechend hochwertige und präzise Kartendaten zu erstellen. Dies ist jedoch teurer als wenn normale Satellitennavigationsempfänger verwendet werden können.

Es ist deshalb eine Aufgabe der Erfindung, Verfahren vorzusehen, welche das Erstellen von Karten mit möglichst wenig Aufwand bzw. Kosten ermöglichen.

Dies wird erfindungsgemäß durch ein Verfahren nach Anspruch 1 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Aktualisieren einer Karte durch einen Server, welches folgende Schritte aufweist:
- Empfangen einer Mehrzahl von Datenpaketen, welche von einer Mehrzahl von Fahrzeugen jeweils mittels eines Verfahrens zum Senden von Daten von einem Fahrzeug an einen Server gesendet werden,
- Berechnen von Kartendaten zumindest teilweise basierend auf den in den Datenpaketen enthaltenen Rohdaten, und
- Aktualisieren der Karte in Abhängigkeit von den Kartendaten und bevorzugt auch in Abhängigkeit von den in den Datenpaketen enthaltenen Positionsdaten, wobei das Verfahren zum Senden von Daten von einem Fahrzeug an einen Server folgende Schritte aufweist:
- Empfangen von Satellitennavigationssignalen,
- Ermitteln von Rohdaten aus den Satellitennavigationssignalen,
- Ermitteln von Positionsdaten aus den Rohdaten,
- Zusammenstellen von Datenpaketen, wobei die Datenpakete zumindest teilweise Rohdaten enthalten, und
- Senden der Datenpakete an den Server.

Mittels eines solchen Verfahrens können die gemäß einem weiter oben beschriebenen erfindungsgemäßen Verfahren zum Senden von Daten an einen Server gesendeten Daten vorteilhaft verwendet werden, um eine Karte zu aktualisieren. Hierbei kann es sich insbesondere um eine elektronische Straßenkarte handeln.

Es sei verstanden, dass unter den Begriff des Aktualisierens hier allgemein auch das Erstellen einer Karte verstanden wird.

Bei dem erfindungsgemäßen Verfahren werden nicht nur erkannte Positionen, sondern insbesondere auch sogenannte Rohdaten unmittelbar an einen Server ausgegeben, so dass diese beispielsweise zum Herstellen oder Aktualisieren einer Karte verwendet werden können. Hierzu kann insbesondere ein Standard-Satellitennavigationsempfänger verwendet werden, welcher jedoch dazu in der Lage sein sollte, die Rohdaten auszugeben. Die Positionsdaten können, müssen jedoch nicht mit an den Server übermittelt werden. Hierauf wird weiter unten näher eingegangen werden. Die Positionsdaten dienen insbesondere zur Eigennavigation bzw. Eigenlokalisierung des Fahrzeugs, welches das Verfahren durchführt.

Es sei verstanden, dass der Schritt des Ermittelns von Positionsdaten aus den Rohdaten grundsätzlich auch entfallen kann, falls dies in der aktuellen Situation vorteilhaft ist bzw. falls die Position nicht anderweitig im Fahrzeug benötigt wird. Der hier erwähnte Schritt betrifft lediglich die typische Anwendung der Positionsdaten.

Zum Senden der Datenpakete an den Server kann insbesondere eine Mobilfunkverbindung oder eine Fahrzeug-zu-X-Kommunikation verwendet werden. Auch andere Funktechniken oder Datenübertragungstechniken sind jedoch möglich.

Bevorzugt beinhalten die Rohdaten eine oder mehrere der folgenden Arten von Daten:
- Pseudo-Ranges,
- Dopplerdaten,
- Carrier-Phasenzähler,
- Messsignalstatus,
- Signal-zu-Rausch-Verhältnis,
- Zeitstempel,
- Ephemeridendaten,
- lonosphärendaten,
- UTC-Schaltsekunde,
- SBAS(Satellite Based Augmentation System)-Daten.

Hierbei handelt es sich typischerweise um diejenigen Daten, welche in einem Satellitennavigationsmodul oder einem Satellitennavigationsempfänger zunächst ermittelt bzw. berechnet werden, und zwar basierend auf den empfangenen Satellitennavigationssignalen. Diese Rohdaten werden dann typischerweise unmittelbar weiterverwendet, um eine Position, eine Geschwindigkeit oder ähnliches Datenmaterial zur Verwendung in Navigationsaufgaben des Fahrzeugs zu erhalten. Es sei verstanden, dass im Rahmen der Durchführung des erfindungsgemäßen Verfahrens eben diese Rohdaten nicht nur hierzu verwendet werden, sondern auch an einen Server geschickt werden, welcher sie dann insbesondere zur Erstellung besonders genauer Karten oder zum Aktualisieren von Karten verwenden kann, wobei hierzu keine besondere Ausführung eines Satellitenempfängers notwendig ist. Insbesondere ist es nicht notwendig, diesen als Zwei-Frequenzempfänger auszuführen.

Die Datenpakete enthalten bevorzugt zumindest teilweise auch Positionsdaten. Dies erlaubt einen Abgleich mit den vom Fahrzeug selbst bestimmten Daten, so dass beispielsweise eine Position, welche der Server basierend auf den Rohdaten ermittelt, mit der vom Fahrzeug selbst bestimmten Position verifiziert werden kann.

Die Positionsdaten können insbesondere einen Standort des Fahrzeugs angeben. Zusätzlich zu einem Standort können die Positionsdaten weiterbildungsgemäß eine Geschwindigkeit und/oder eine Zeit des Fahrzeugs angeben. Dies sind typische Daten, welche zur Navigation eines Fahrzeugs verwendet werden. Anhand mehrerer Standorte kann beispielsweise ein Straßenverlauf rekonstruiert werden, wenn das Fahrzeug einer Straße folgt.

Die Positionsdaten können bevorzugt durch Fusion der Rohdaten mit in den Datenpaketen enthaltenen Fahrdynamikdaten ermittelt werden. Die Fahrdynamikdaten können beispielsweise aus Inertialsensoren, Raddrehzahlsensoren, Lenkwinkelsensoren, Kameras, Radargeräten oder anderen Sensoriken des Fahrzeugs stammen. Damit kann eine besonders hohe Genauigkeit und Zuverlässigkeit erreicht werden.

Beim Schritt des Ermittelns der Position wird bevorzugt eine Genauigkeit der Positionsdaten bestimmt. Dies kann beispielsweise basierend auf den Rohdaten oder den Satellitennavigationssignalen erfolgen. Dadurch wird ein Maß dafür erhalten, wie genau die Positionsdaten sind, wobei beispielsweise ermittelt werden kann, ob sie zum Bestimmen eines Verlaufs einer Straße ausreichen.

Gemäß einer bevorzugten Ausführung werden die Datenpakete in Abhängigkeit von einer Anzahl von Parametern zusammengestellt. Damit können die Datenpakete variabel zusammengestellt werden, so dass immer eine optimale Zusammenstellung der Datenpakete erfolgt.

Ein Parameter kann dabei insbesondere die Genauigkeit der Positionsdaten sein. Andere Parameter können beispielsweise die Anzahl der sichtbaren Satelliten, eine gefahrene Quer- und/oder Längsbeschleunigung oder eine Abweichung zur Karte beim Map Matching sein. Für derartige Parameter können beispielsweise jeweilige absolute oder relative Schwellenwerte vorgegeben werden.

Gemäß einer Ausführung kann vorgesehen sein, dass, wenn die Genauigkeit der Positionsdaten einen Schwellenwert übersteigt, keine Rohdaten in die Datenpakete aufgenommen werden. Somit kann auf das Senden von Rohdaten verzichtet werden, wenn die Genauigkeit der Positionsdaten schon ausreicht, um eine Karte zu erstellen oder zu aktualisieren.

Gemäß einer Ausführung kann vorgesehen sein, dass, wenn die Genauigkeit der Positionsdaten einen Schwellenwert unterschreitet, Rohdaten in die Datenpakete aufgenommen werden. Damit kann dem Server ermöglicht werden, die Rohdaten selbst auszuwerten und damit die Position zu bestimmen, wobei ein solcher Server beispielsweise auf eine größere Rechenleistung und eine längere Zeitdauer zurückgreifen kann, als dies fahrzeugintern der Fall ist.

Es sei verstanden, dass die beiden eben erwähnten Schwellenwerte identisch oder auch unterschiedlich zueinander sein können.

Die Datenpakete können zumindest teilweise auch Fahrdynamikdaten und/oder Korrekturdaten enthalten. Auch diese können von einem Server zur besseren Erstellung oder Aktualisierung einer Karte verwendet werden.

Die Datenpakete können in Abhängigkeit von Anweisungen zusammengestellt werden, welche vom Server empfangen wurden. Damit kann der Server beispielsweise für bestimmte Gebiete oder Straßen anfordern, dass bestimmte Daten wie beispielsweise Rohdaten zur besonders genauen eigenen Positionsbestimmung an den Server gesendet werden, insbesondere wenn in dem entsprechenden Gebiet noch keine guten Daten vorliegen.

Gemäß einer bevorzugten Ausführung können die Datenpakete oder zumindest ein Teil der Datenpakete, insbesondere Rohdaten und/oder Fahrdynamikdaten, zunächst gespeichert und erst bei Verfügbarkeit eines bestimmten Kommunikationsnetzes, insbesondere WLAN, gesendet werden. Damit kann beispielsweise die Datenübertragungskapazität oder das Volumen von Mobilfunknetzen, welche ansonsten zur Übermittlung von entsprechenden Daten an einen Server genutzt werden können, geschont werden. Ein Fahrzeug kann die entsprechenden Daten einfach untertags bzw. während der Fahrt sammeln und bei Verfügbarkeit einer entsprechend leistungsfähigen und kostengünstigen Verbindung wie beispielsweise WLAN gesammelt an den Server senden.

Die Daten können insbesondere auch verschlüsselt werden, um Manipulationen auszuschließen. Besonders bevorzugt werden sie bereits im Fahrzeug verschlüsselt und verschlüsselt an den Server gesendet.

Um eine weitere Erhöhung der Sicherheit zu erreichen, können auch zusätzlich Daten aus den sogenannten "Public Regulated Services" (PRS) von Satellitennavigationssystemen wie beispielsweise Galileo empfangen und mitgesendet werden. So kann erkannt werden, ob die Daten schon vor dem Empfänger verändert wurden, beispielsweise mittels Spoofing. In einem Backend können diese schon beim Empfang verschlüsselten PRS-Daten entschlüsselt werden und somit können mutwillige Veränderungen erkannt werden.

Hinsichtlich des Verfahrens zum Senden der Daten kann auf alle hierin beschriebenen Ausführungen und Varianten zurückgegriffen werden.

Es sei verstanden, dass ein Server insbesondere über erheblich größere Rechenkapazitäten und auch mehr Zeit als ein Fahrzeug verfügt, um aus den Rohdaten Positionsdaten zu ermitteln, sowie eventuell über zusätzlich Information über die verwendeten Satellitensignale, wie umfangreichere Korrekturdaten oder Informationen über Störungen, beispielsweise durch Sonnenstürme. Somit kann auch bei gleichen verfügbaren Rohdaten, welche aus dem Satellitennavigationssystem im Fahrzeug gewonnen wurden, von dem Server eine genauere Positionsbestimmung des Fahrzeugs vorgenommen werden, als dies das Fahrzeug selbst leisten kann. Die Rohdaten können somit besser zur Aktualisierung der Karte verwendet werden, als dies bei ausschließlicher Übertragung von Positionsdaten durch das Fahrzeug an den Server der Fall wäre.

Gemäß einer Weiterbildung weist das Verfahren ferner folgende Schritte auf:
- Ermitteln einer Anzahl von Anweisungen, wobei die Anweisungen angeben, in welchen Gebieten oder unter welchen sonstigen Bedingungen Rohdaten oder Positionsdaten gesendet werden sollen, und
- Senden der Anweisungen an eine Anzahl von Fahrzeugen, welche jeweils ein erfindungsgemäßes Verfahren zum Senden von Daten ausführen.

Mittels dieser Ausführung kann der Server selbst festlegen, bei welchen Gebieten er von Fahrzeugen bestimmte Daten wie beispielsweise Rohdaten haben will. Wenn ein Gebiet noch schlecht erfasst ist, kann er die Fahrzeuge anweisen, bevorzugt Rohdaten zu senden, um selbst eine möglichst genaue Positionsbestimmung und damit eine Bestimmung von Streckenverläufen von Straßen vorzunehmen. Durch derartige Anweisungen können beispielsweise die weiter oben genannten Schwellenwerte beeinflusst werden. Ist demgegenüber ein Gebiet bereits besonders gut und genau erfasst, kann mittels der Anweisung den Fahrzeugen mitgeteilt werden, dass aus diesem Gebiet nur noch wenige Daten, beispielsweise keine Rohdaten, gesendet werden sollen.

Allgemein kann auch davon gesprochen werden, dass ein Standard-Satellitennavigationsempfänger verwendet werden kann, welcher jedoch auch die sogenannten Rohdaten ausgeben kann. Daten dieses Satellitennavigationsempfängers können mit Fahrdynamikdaten fusioniert und daraus eine Position berechnet werden. Außerdem können auch zusätzliche Daten berechnet werden.

Vor dem Senden der Daten an einen Server kann geprüft werden, wie gut die Empfangsbedingungen für Satellitennavigation sind und welche Genauigkeit damit wahrscheinlich erreichbar ist. Je nach erzielbarer Genauigkeit können unterschiedliche Daten an den Server bzw. ein Backend gesendet werden.

Ist die erzielbare Genauigkeit hoch genug, werden vorteilhaft nur die errechneten Positionen versendet.

Reicht die erzielbare Genauigkeit nicht, so werden vorteilhaft statt der errechneten Positionen oder zusätzlich dazu die Rohdaten und die dazu passenden Fahrdynamikdaten an den Server bzw. das Backend gesendet. Dort kann mit hochwertigen Algorithmen wie beispielsweise Vorwärts-Rückwärts-Rechnung oder sogar unter Zuhilfenahme von Korrekturdaten eine entsprechend genauere Position ermittelt werden, die dann für das Lernen der Karte verwendet wird. Teile der Korrekturdaten können dabei beispielsweise auch Satellitenkonstellationen sein, so dass die Auswahl der für die Positionsberechnung zu verwendenden Satelliten auf Basis dieser externen Informationen optimiert werden kann.

Es ist auch möglich, dass der Server bzw. das Backend an das Fahrzeug übermittelt, in welchen Regionen er bzw. es lieber Rohdaten und/oder Fahrdynamikdaten bekommen möchte, beispielsweise weil dort die Datenbasis im Backend dünn ist oder die Genauigkeit bisher nicht gereicht hat. Auch andere Gründe sind denkbar.

Eine andere Möglichkeit für die Entscheidung, welche Daten gesendet werden, können Schwellenwerte sein, wie beispielsweise die Anzahl der sichtbaren Satelliten, eine gefahrene Quer- und/oder Längsbeschleunigung oder eine Abweichung zur Karte beim Map Matching.

Um Kommunikationskosten zu sparen, bietet es sich an, die Daten während der Fahrt zu speichern und dann beispielsweise mittels WLAN zu übertragen, wenn solch eine Verbindung zur Verfügung steht. Beispielsweise kann dies auf einem Parkplatz zu Hause der Fall sein.

Vor allem für die Rohdaten und die Fahrdynamikdaten bietet sich dieses Vorgehen an, da hier die Datenmengen deutlich größer sind als bei den bereits mittels Fusion ermittelten Positionsdaten. Da in den Rohdaten implizit ein Zeitstempel enthalten ist, ist es auch möglich, die Daten noch einige Zeit nach der Messung zu übermitteln und trotzdem einen klaren Zeitbezug auf dem Server herstellen zu können.

Um zu verhindern, dass die Daten auf dem Weg zum Backend verändert werden, bietet es sich an, diese direkt im Fahrzeug zu verschlüsseln oder mit einem digitalen Zertifikat zu signieren. Eine zusätzliche Verbesserung der Verlässlichkeit der Daten kann erreicht werden, wenn nicht nur verschlüsselt wird, sondern zusätzlich Daten aus den sogenannten "Public Regulated Services" (PRS) mitübertragen werden. Dies wurde weiter oben bereits beschrieben, worauf hier verwiesen wird.

Durch das hierin beschriebene Verfahren können trotz reduziertem Hardware-Aufwand und vor allem zu deutlich reduzierten Kosten trotzdem die notwendigen Genauigkeiten für eine gelernte Karte erreicht werden. Damit kann auch die Basis von Fahrzeugen vergrößert werden, welche Daten ermitteln, da normalerweise Satellitennavigationsempfänger mittlerweile in fast allen Fahrzeugen verbaut werden.

Die Erfindung betrifft des Weiteren ein Steuerungsmodul sowie ein Fahrzeug, welches zum Ausführen eines erfindungsgemäßen Verfahrens konfiguriert ist. Die Erfindung betrifft auch einen Server, welcher zur Ausführung eines erfindungsgemäßen Verfahrens konfiguriert ist. Außerdem betrifft die Erfindung ein nichtflüchtiges computerlesbares Speichermedium, auf welchem Programmcode gespeichert ist, bei dessen Ausführung ein Prozessor ein erfindungsgemäßes Verfahren ausführt. Bezüglich des erfindungsgemäßen Verfahrens kann dabei jeweils auf alle hierin beschriebenen Ausführungen und Varianten zurückgegriffen werden.

Weitere Merkmale und Vorteile wird der Fachmann dem nachfolgend mit Bezug auf die beigefügte Zeichnung beschriebenen Ausführungsbeispiel entnehmen. Dabei zeigt:

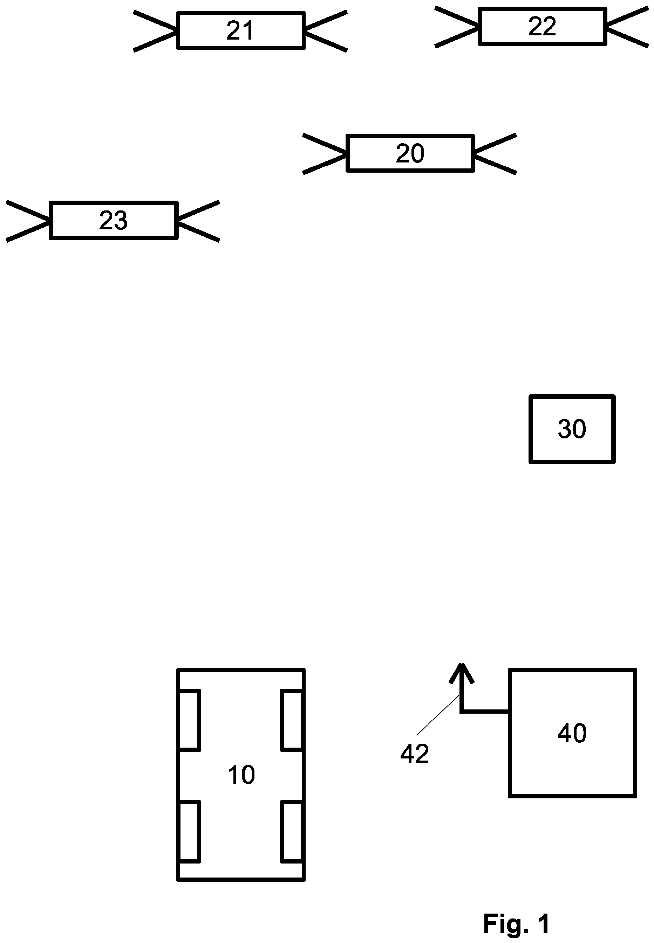

- Fig. 1:: eine Anordnung zur Durchführung des erfindungsgemäßen Verfahrens.

Fig. 1 zeigt ein Fahrzeug 10, welches hier lediglich schematisch dargestellt ist. Das Fahrzeug 10 ist zum Ausführung eines erfindungsgemäßen Verfahrens gemäß einem Ausführungsbeispiel ausgebildet.

Des Weiteren zeigt Fig. 1 auch einen Server 30, welcher ebenfalls zur Durchführung eines erfindungsgemäßen Verfahrens ausgebildet ist. Das Fahrzeug 10 ist grundsätzlich dazu in der Lage, jederzeit seine Position zu bestimmen. Hierzu kann es Signale aus einem Satellitennavigationssystem empfangen, wobei hier beispielhaft vier Satelliten dargestellt sind, nämlich ein erster Satellit 20, ein zweiter Satellit 21, ein dritter Satellit 22 und ein vierter Satellit 23. Diese sind hier lediglich schematisch und beispielhaft für eine Vielzahl von Satelliten eines typischen Satellitennavigationssystems dargestellt.

Das Fahrzeug 10 ist des Weiteren dazu konfiguriert, auch Rohdaten zu erzeugen und zu speichern, welche aus Satellitensignalen berechnet werden. Diese Rohdaten werden insbesondere dann gespeichert, wenn eine berechnete Genauigkeit der Positionsbestimmung aus Satellitennavigation einen vorgegebenen Schwellenwert unterschreitet.

Die Rohdaten werden im Fahrzeug 10 so lange gespeichert, bis es sich in der Reichweite eines WLANs befindet. Dies ist hier schematisch in Form eines Hauses 40 mit einer WLAN-Antenne 42 dargestellt. Bei dem Haus 40 kann es sich beispielsweise um das Haus des Eigentümers des Fahrzeugs 10 handeln.

Wenn das Fahrzeug 10 neben dem Haus 40 abgestellt wird, baut das Fahrzeug 10 eine Verbindung über die WLAN-Antenne 42 zum weltweiten Internet auf. Der Server 30 ist am Internet angeschlossen, so dass das Fahrzeug 10 anschließend die Rohdaten an den Server 30 senden kann. Der Server 30 kann dann diese Rohdaten verwenden, um eine besonders genaue Positionsbestimmung durchzuführen. Damit kann der Server 30 Karten aktualisieren, welche dann wiederum für Navigationszwecke durch eine Vielzahl von Fahrzeugen verwendet werden können.

Es sei verstanden, dass die von dem Fahrzeug 10 an den Server 30 gesendeten Daten typischerweise anonymisiert werden, so dass eine Verfolgung der genauen Fahrroute des Fahrzeugs 10 in personalisierter Form nicht möglich ist. Eine solche Implementierung wird typischerweise erforderlich sein, um eine Akzeptanz des erfindungsgemäßen Verfahrens bei Benutzern zu erreichen.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar.

## Patentansprüche

1. Verfahren zum Aktualisieren einer Karte durch einen Server (30), welches folgende Schritte aufweist:
- Empfangen einer Mehrzahl von Datenpaketen, welche von einer Mehrzahl von Fahrzeugen (10) jeweils mittels eines Verfahrens zum Senden von Daten von einem Fahrzeug (10) an den Server (30) gesendet wurden,
- Berechnen von Kartendaten zumindest teilweise basierend auf in den Datenpaketen enthaltenen Rohdaten, und
- Aktualisieren der Karte in Abhängigkeit von den Kartendaten, wobei das Verfahren zum Senden von Daten von einem Fahrzeug (10) an den Server (30) folgende Schritte aufweist:
- Empfangen von Satellitennavigationssignalen,
- Ermitteln der Rohdaten aus den Satellitennavigationssignalen,
- Ermitteln von Positionsdaten aus den Rohdaten, **dadurch gekennzeichnet, dass**
- Zusammenstellen der Datenpakete, wobei die Datenpakete zumindest teilweise Rohdaten enthalten, und
- Senden der Datenpakete an den Server (30).

2. Verfahren nach Anspruch 1,
wobei die Rohdaten eine oder mehrere der folgenden Arten von Daten enthalten:
- Pseudoranges,
- Dopplerdaten,
- Carrierphasenzähler,
- Messsignalstatus,
- Signal-zu-Rausch-Verhältnis,
- Zeitstempel,
- Ephemeridendaten,
- lonosphärendaten,
- UTC Schaltsekunde,
- SBAS (Satellite Based Augmentation System)-Daten.

3. Verfahren nach einem der vorhergehenden Ansprüche,
- wobei die Datenpakete zumindest teilweise auch Positionsdaten enthalten.

4. Verfahren nach einem der vorhergehenden Ansprüche,
- wobei die Positionsdaten einen Standort angeben.

5. Verfahren nach Anspruch 4,
- wobei die Positionsdaten zusätzlich zu einem Standort eine Geschwindigkeit und/oder eine Zeit des Fahrzeugs (10) angeben.

6. Verfahren nach einem der vorhergehenden Ansprüche,
- wobei die Positionsdaten durch Fusion der Rohdaten mit in den Datenpaketen enthaltenen Fahrdynamikdaten ermittelt werden.

7. Verfahren nach einem der vorhergehenden Ansprüche,
- wobei beim Schritt des Ermittelns der Position eine Genauigkeit der Positionsdaten bestimmt wird.

8. Verfahren nach einem der vorhergehenden Ansprüche,
- wobei die Datenpakete in Abhängigkeit von einer Anzahl von Parametern zusammengestellt werden.

9. Verfahren nach Anspruch 7 und nach Anspruch 8,
- wobei ein Parameter die Genauigkeit der Positionsdaten ist.

10. Verfahren nach Anspruch 9,
- wobei, wenn die Genauigkeit der Positionsdaten einen Schwellenwert übersteigt, keine Rohdaten in die Datenpakete aufgenommen werden.

11. Verfahren nach einem der Ansprüche 9 oder 10,
- wobei, wenn die Genauigkeit der Positionsdaten einen Schwellenwert unterschreitet, Rohdaten in die Datenpakete aufgenommen werden.

12. Verfahren nach einem der vorhergehenden Ansprüche,
- wobei die Datenpakete zumindest teilweise auch Korrekturdaten enthalten.

13. Verfahren nach einem der vorhergehenden Ansprüche,
- wobei die Datenpakete in Abhängigkeit von Anweisungen zusammengestellt werden, welche vom Server (30) empfangen wurden.

14. Verfahren nach einem der vorhergehenden Ansprüche,
- wobei die Datenpakete oder zumindest ein Teil der Datenpakete zunächst gespeichert und erst bei Verfügbarkeit eines bestimmten Kommunikationsnetzes, insbesondere WLAN, gesendet werden.

15. Verfahren nach einem der vorhergehenden Ansprüche,
- wobei das Aktualisieren der Karte auch in Abhängigkeit von den in den Datenpaketen enthaltenen Positionsdaten erfolgt.

16. Verfahren nach einem der vorhergehenden Ansprüche,
wobei das Verfahren ferner folgende Schritte aufweist:
- Ermitteln einer Anzahl von Anweisungen, wobei die Anweisungen angeben, in welchen Gebieten oder unter welchen sonstigen Bedingungen Rohdaten oder, bei Rückbezug auch auf Anspruch 3, Positionsdaten gesendet werden sollen, und
- Senden der Anweisungen an eine Anzahl von Fahrzeugen (10), welche jeweils das Verfahren zum Senden von Daten von einem jeweiligen Fahrzeug an den Server ausführen.

## Claims

1. Method for updating a map using a server (30), comprising the following steps:
- receiving a plurality of data packets that have been transmitted by a plurality of vehicles (10) each using a method for transmitting data from a vehicle (10) to the server (30),
- computing at least some map data on the basis of raw data contained in the data packets, and
- updating the map on the basis of the map data, wherein the method for transmitting data from a vehicle (10) to the server (30) comprises the following steps:
- receiving satellite navigation signals,
- ascertaining the raw data from the satellite navigation signals,
- ascertaining position data from the raw data, **characterized in that**
- the data packets are compiled, at least some of the data packets containing raw data, and
- the data packets are transmitted to the server (30).

2. Method according to Claim 1,
wherein the raw data contain one or more of the following types of data:
- pseudo-ranges,
- Doppler data,
- carrier phase counters,
- measurement signal status,
- signal-to-noise ratio,
- timestamps,
- ephemeris data,
- ionospheric data,
- UTC leap second,
- SBAS (Satellite-Based Augmentation System) data.

3. Method according to either of the preceding claims,
- wherein at least some of the data packets also contain position data.

4. Method according to one of the preceding claims,
- wherein the position data indicate a location.

5. Method according to Claim 4,
- wherein the position data indicate a velocity and/or a time of the vehicle (10) in addition to a location.

6. Method according to one of the preceding claims,
- wherein the position data are ascertained by fusing the raw data with driving dynamics data contained in the data packets.

7. Method according to one of the preceding claims,
- wherein the step of ascertaining the position involves determining an accuracy of the position data.

8. Method according to one of the preceding claims,
- wherein the data packets are compiled on the basis of a number of parameters.

9. Method according to Claim 7 and according to Claim 8,
- wherein a parameter is the accuracy of the position data.

10. Method according to Claim 9,
- wherein if the accuracy of the position data is above a threshold value, no raw data are included in the data packets.

11. Method according to either of Claims 9 and 10,
- wherein if the accuracy of the position data is below a threshold value, raw data are included in the data packets.

12. Method according to one of the preceding claims,
- wherein at least some of the data packets also contain correction data.

13. Method according to one of the preceding claims,
- wherein the data packets are compiled on the basis of instructions that were received from the server (30).

14. Method according to one of the preceding claims,
- wherein the data packets or at least some of the data packets are initially stored and are transmitted only when a specific communication network, in particular a WLAN, is available.

15. Method according to one of the preceding claims,
- wherein the map is also updated on the basis of the position data contained in the data packets.

16. Method according to one of the preceding claims,
wherein the method further comprises the following steps:
- ascertaining a number of instructions, wherein the instructions indicate the areas in which or the other conditions under which raw data or, when also referring back to Claim 3, position data are supposed to be transmitted, and
- transmitting the instructions to a number of vehicles (10) that each perform the method for transmitting data from a respective vehicle to the server.

## Revendications

1. Procédé pour actualiser une carte par un serveur (30), lequel comprend les étapes suivantes :
- réception d'une pluralité de paquets de données, lesquels ont été émis par une pluralité de véhicules (10) respectivement au moyen d'un procédé d'émission de données d'un véhicule (10) au serveur (30),
- calcul de données cartographiques en se basant au moins partiellement sur les données brutes contenues dans les paquets de données, et
- actualisation de la carte en fonction des données cartographiques, le procédé d'émission de données d'un véhicule (10) au serveur (30) comprenant les étapes suivantes :
- réception de signaux de navigation satellitaires,
- identification des données brutes à partir des signaux de navigation satellitaires,
- identification de données de position à partir des données brutes, **caractérisé en ce que**
- des paquets de données sont regroupés, les paquets de données contenant au moins partiellement des données brutes, et
- des paquets de données sont émis au serveur (30).

2. Procédé selon la revendication 1, les données brutes contenant un ou plusieurs des types de données suivants :
- pseudodistances,
- données Doppler,
- compteurs de phase de porteuse,
- état de signal de mesure,
- rapport signal/bruit,
- estampille temporelle,
- données d'éphéméride,
- données d'ionosphère,
- seconde intercalaire UTC,
- données de SBAS (Satellite-based Augmentation System - Système d'augmentation spatial).

3. Procédé selon l'une des revendications précédentes,
- les paquets de données contenant au moins partiellement aussi des données de position.

4. Procédé selon l'une des revendications précédentes,
- les données de position indiquant un lieu.

5. Procédé selon la revendication 4,
- les données de position indiquant en plus d'un lieu une vitesse et/ou un temps du véhicule (10).

6. Procédé selon l'une des revendications précédentes,
- les données de position étant identifiées par fusion des données brutes avec des données de dynamique de conduite contenues dans les paquets de données.

7. Procédé selon l'une des revendications précédentes,
- une précision des données de position étant déterminée lors de l'étape d'identification de la position.

8. Procédé selon l'une des revendications précédentes,
- les paquets de données étant regroupés en fonction d'un nombre de paramètres.

9. Procédé selon la revendication 7 et selon la revendication 8,
- un paramètre étant la précision des données de position.

10. Procédé selon la revendication 9,
- lorsque la précision des données de position dépasse une valeur de seuil, aucune donnée de position n'étant alors enregistrée dans les paquets de données.

11. Procédé selon l'une des revendications 9 ou 10,
- lorsque la précision des données de position devient inférieure à une valeur de seuil, des données de position étant alors enregistrées dans les paquets de données.

12. Procédé selon l'une des revendications précédentes,
- les paquets de données contenant aussi au moins partiellement des données de correction.

13. Procédé selon l'une des revendications précédentes,
- les paquets de données étant regroupés en fonction d'instructions qui ont été reçues par le serveur (30).

14. Procédé selon l'une des revendications précédentes,
- les paquets de données ou au moins une partie des paquets de données étant tout d'abord mémorisés et émis seulement en cas de disponibilité d'un réseau de communication déterminé, notamment un WLAN.

15. Procédé selon l'une des revendications précédentes,
- l'actualisation de la carte s'effectuant également en fonction des données de position contenues dans les paquets de données.

16. Procédé selon l'une des revendications précédentes, le procédé comprenant en outre les étapes suivantes :
- identification d'un nombre d'instructions, les instructions indiquant les régions dans lesquelles ou les autres conditions sous lesquelles doivent être émises les données brutes ou, en référence à la revendication 3, les données de position, et
- émission des instructions à un certain nombre de véhicules (10) qui mettent respectivement en œuvre le procédé d'émission de données d'un véhicule respectif au serveur.
